# FASCICULE DE BREVET EUROPEEN

(11) **EP 3 714 499 B1**
(45) Date de publication et mention de la délivrance du brevet: **30.08.2023**
(21) Numéro de dépôt: 18827174.6
(22) Date de dépôt: 19.11.2018
(51) Int. Cl.: H01M 4/13, H01M 4/38, H01M 4/62, H01M 10/052, H01M 10/0565, H01M 10/0568, H01M 4/136, H01M 4/40, H01M 4/58

(54) **UTILISATION DU NITRATE DE LITHIUM EN TANT QUE SEUL SEL DE LITHIUM DANS UNE BATTERIE AU LITHIUM GÉLIFIÉE**
VERWENDUNG VON LITHIUMNITRAT ALS EINZIGEM LITHIUMSALZ IN EINER GELARTIGEN LITHIUMBATTERIE
USE OF LITHIUM NITRATE AS SINGLE LITHIUM SALT IN A GELIFIED LITHIUM BATTERY

(30) Priorité: 20.11.2017 FR 1760904
(43) Date de publication de la demande: 30.09.2020
(73) Titulaire: Blue Solutions, 29500 Ergué Gabéric (FR)
(72) Inventeur: DESCHAMPS, Marc, 29000 Quimper (FR); LECUYER, Margaud, 29120 Combrit (FR)
(74) Mandataire: IPAZ
(86) Numéro de dépôt international: PCT/FR2018/052897
(87) Numéro de publication internationale: WO 2019/097190

(56) Documents cités:
- EP-A1- 2 562 865
- CN-A- 101 381 501
- JP-A- H10 134 817
- US-A1- 2015 311 492

## Description

La présente invention se rapporte au domaine technique général des batteries au lithium.

Plus particulièrement, l'invention est relative à l'utilisation du nitrate de lithium (LiNO₃) en tant que seul sel de lithium assurant la conductivité ionique dans une batterie rechargeable gélifiée au lithium métallique et ne comprenant pas d'ions polysulfures. En particulier, elle est relative à un électrolyte gélifié non aqueux pour batterie au lithium comprenant du nitrate de lithium à titre de seul sel de lithium assurant la conductivité ionique ; elle est également relative à une électrode positive gélifiée pour batterie au lithium comprenant du nitrate de lithium à titre de seul sel de lithium assurant la conductivité ionique ; elle est enfin relative à une batterie gélifiée au lithium comprenant une électrode positive, un électrolyte gélifié et une électrode négative à base de lithium métallique ou d'un alliage de lithium dans laquelle l'électrolyte gélifié et/ou l'électrode positive comprend du nitrate de lithium à titre de seul sel de lithium assurant la conductivité ionique.

Les batteries au lithium sont particulièrement destinées aux véhicules automobiles ainsi qu'au stockage stationnaire de l'énergie électrique.

Parmi les batteries au lithium, les batteries Lithium-métal-polymère (ou LMP) sont des batteries « tout solide » se présentant généralement sous forme d'un assemblage de films minces superposés. Quatre films fonctionnels entrent dans leur composition : i) une électrode négative (anode) en lithium métallique ou en alliage de lithium assurant la fourniture des ions lithium lors de la décharge de la batterie, ii) un électrolyte polymère solide conducteur des ions lithium, iii) une électrode positive (cathode) composée d'une matière active d'électrode agissant comme un réceptacle où les ions lithium viennent s'intercaler, et enfin iv) un collecteur de courant en contact avec l'électrode positive permettant d'assurer la connexion électrique.

L'électrolyte polymère solide est généralement composé d'un polymère à base de poly(oxyde d'éthylène) (POE) et d'au moins un sel de lithium ; l'électrode positive est habituellement composée d'un matériau dont le potentiel de travail est inférieur à 4V vs Li⁺/Li (i.e. le potentiel d'insertion/désinsertion du lithium est inférieur à 4V) tel que par exemple un oxyde de métal (comme par exemple V₂O₅, LiVsOs, LiC_{O}O₂, LiNiO₂, LiMn₂O₄ et LiNi_{0.5}Mn_{0.5}O₂...) ou un phosphate de type LiMPO₄, où M représente un cation métal sélectionné parmi le groupe Fe, Mn, Co, Ni et Ti, ou des combinaisons de ces cations, comme par exemple LiFePO₄, et contient également du carbone et un polymère ; et le collecteur de courant est généralement constitué d'une feuille de métal. La conductivité des ions est assurée par la dissolution du sel de lithium dans le polymère entrant dans la composition de l'électrolyte solide.

Les batteries au lithium, et particulièrement les batteries LMP, présentent un certain nombre d'avantages.

En premier lieu, la densité massique des batteries LMP est de l'ordre de 120 à 180 Wh/kg soit une densité d'énergie au minimum 2,5 fois plus élevée que les batteries au plomb de voiture thermique (30-50 Wh/kg). Les batteries LMP n'ont par ailleurs pas d'effet mémoire et il est donc inutile de les décharger complètement avant de les recharger, comme dans les cas de certaines autres technologies (Ni-Cd). Enfin, avec une tension identique à celles des batteries au Lithium-ion (de l'ordre de 3,4 V), les batteries LMP ne demandent aucun entretien et ont une durée de vie de près de 10 ans, ce qui est intéressant d'un point de vue commercial et qui les rend pertinentes pour des applications nécessitant des tractions électriques.

Les batteries LMP présentent néanmoins un inconvénient important. En effet, pour les utiliser, elles doivent être maintenues à une température d'environ 60-80°C, ce qui impose quasiment de les maintenir en charge en laissant le véhicule branché sur le secteur quand il ne roule pas. A défaut, les batteries LMP se vident en quelques jours de par leur maintien en température.

Une des solutions pour surmonter ce problème, est l'utilisation de batteries au lithium comportant, tout comme dans les batteries LMP, une électrode négative constituée d'une feuille de lithium métallique ou d'un alliage de lithium et une électrode positive en un matériau capable d'insérer les ions lithium, mais dans lesquelles l'électrolyte polymère est remplacé par un électrolyte gélifié (batteries lithium-métal-gel). Ces batteries présentent en effet des températures de fonctionnement plus basses que celles de batteries LMP, en particulier de l'ordre de 0 à 60°C. Cependant lors du fonctionnement de ces batteries, il se forme une mousse de lithium à la surface de l'électrode négative. Cette mousse de lithium est due à un électrodépôt de mauvaise qualité sur l'électrode négative, ce qui a pour conséquence d'affecter la durée de vie de telles batteries. Ceci est lié au manque de robustesse de la couche de passivation sur la surface de l'électrode de lithium.

En effet, lors du fonctionnement de la batterie, une couche dite de passivation (connue également sous l'appellation anglophone « *Solid Electrolyte Interface* » ou SEI) se forme sur l'électrode négative. Cette couche de passivation est notamment produite par réduction de l'électrolyte à la surface de l'électrode négative dès le premier cycle de la batterie, consommant une partie des ions lithium présents dans l'électrolyte. Cette couche de passivation est indispensable au bon fonctionnement de l'électrode négative et sa qualité est déterminante pour ses performances futures et celles de la batterie la comprenant. Elle doit présenter un certain nombre de qualités : i) être suffisamment conductrice des ions lithium, ii) non conductrice des électrons et iii) présenter une bonne résistance mécanique. En effet, lorsque la qualité de la couche de passivation n'est pas suffisante, on observe une perte progressive de capacité et/ou de rendement coulombique de la batterie et une diminution de sa durée de vie.

Diverses solutions ont déjà été proposées pour améliorer la qualité de la couche de passivation dans les batteries au lithium comprenant une électrode négative au lithium métallique, en particulier l'ajout d'additifs, notamment dans la composition de l'électrolyte.

A titre d'exemple, on peut notamment mentionner l'ajout de vinylène carbonate comme décrit par exemple dans l'article de H. Ota et al. (Electrochimica Acta, 2004, 49, 565-572).

Cependant, ces solutions ne sont pas entièrement satisfaisantes, en particulier parce que les sels de lithium utilisés restent couteux et que les cyclabilités sont limitées à moins de 100 cycles.

Il est par ailleurs connu d'utiliser du nitrate de lithium comme additif dans l'électrolyte des batteries lithium-soufre. Les batteries lithium-soufre comprennent une électrode négative à base de lithium métallique ou d'un alliage à base de lithium, une électrode positive généralement en carbone poreux et comprenant une matière active d'électrode positive à base de soufre ou d'un composé organique contenant du soufre, lesdites électrodes étant séparées par un séparateur imprégné d'un électrolyte comprenant des ions lithium en solution dans un solvant. Les batteries lithium-soufre sont un des systèmes de stockage électrochimique de l'énergie les plus prometteurs, de telles batteries pouvant atteindre théoriquement une capacité spécifique et une densité massique d'énergie élevées respectivement de 1675 mAh/g_{soufre} et de 2600 Wh/kg_{soufre}. L'intérêt pour les batteries lithium-soufre est cependant tempéré par un certain nombre de problèmes parmi lesquels figure le problème de la navette redox (connu également sous l'appellation anglophone « *redox shuttle* ») due à la présence notamment d'ions polysulfures générés par réduction du soufre au sein de l'électrode positive. Les ions polysulfures formés à l'électrode positive sont solubles dans la majorité des électrolytes liquides. Ceux-ci migrent donc vers l'électrode négative où ils sont à nouveau réduits. Ce phénomène ralentit considérablement la charge de ce type de batteries en consommant une partie du courant pour alimenter la navette redox. Pour lutter contre ce phénomène, il a déjà été proposé, notamment par Li W. et al. (Nature Communications, DOI : 10, 1038/ncomms8436, 2015, p : 1-8), d'ajouter de petites quantités (de l'ordre de 0,15 M ou 0,75M environ) de nitrate de lithium à titre d'additif dans l'électrolyte de batteries lithium-soufre contenant un sel de lithium et des ions polysulfures afin de générer un effet synergique entre lesdits ions polysulfures et le nitrate de lithium pour former une couche de passivation stable, sensée réduire le phénomène de navette redox. Cette solution n'est cependant pas transposable aux batteries ne comportant pas d'électrode positive à base de soufre et donc pas d'ions polysulfures dans l'électrolyte.

Le document EP 2 562 865 A1 divulgue un gel électrolytique comprenant un solvant non-aqueux et un composant gélifiant, dans lequel le solvant non aqueux comprend des sels de lithium, et le composant gélifiant comprend un polyéthylène glycol à doubles liaisons insaturées, un monomère de type ester comprenant une double liaison insaturée, un agent de couplage de type silane et un initiateur thermique. Les sels de lithium comprennent 70 à 100 % d'un sel principal et de 0 à 30 % d'un sel auxiliaire, le sel principal étant choisi parmi LiPF₆, LiBF₄, LiClO₄, LiI, LiNO₃, LiCF₃SO₃, LiN(CF₃SO₂)₂, LiN(CF₂CF₃SO₂)₂ ; et le sel auxiliaire étant choisi parmi LiB(C₂O₄)₂ ou LiBF₂C₂O₄.

Le document CN 101 381 505 A décrit un électrolyte polymère solide comprenant 30-75% en poids de poly(butyral de vinyle), 5-70%.en poids de plastifiant (polyéthylène glycol), et 10-85% en poids d'un sel inorganique comprenant du lithium (LiClO₄ ou LiNO₃).

Les inventeurs se sont donc donné pour but de proposer une solution qui permette de remédier aux problèmes rencontrés dans les batteries au lithium gélifiées. En particulier, les inventeurs se sont fixé pour but de proposer une solution qui permette d'améliorer la durée de vie des batteries au lithium gélifiées.

De façon tout à fait contre intuitive, les inventeurs ont découvert que l'utilisation de nitrate de lithium en tant que seul sel de lithium dans une batterie rechargeable gélifiée au lithium métallique et ne comprenant pas d'ions polysulfures, permet d'améliorer la qualité de la couche de passivation, notamment par l'amélioration de la qualité du dépôt de lithium sur l'électrode négative, et ainsi la durée de ladite batterie. Bien que la conductivité de ce sel de lithium soit inférieure à celle des sels de lithium conventionnellement utilisés dans les batteries au lithium, les inventeurs ont découvert que l'amélioration de la qualité de l'interface entre l'électrolyte et l'électrode négative permettait d'obtenir des batteries au lithium ayant de bonnes performances.

La présente invention a donc pour premier objet l'utilisation du nitrate de lithium, en tant que seul sel de lithium assurant la conductivité ionique dans une batterie au lithium comprenant au moins une électrode positive, au moins un électrolyte non aqueux et au moins une électrode négative à base de lithium métallique ou d'un alliage de lithium, ladite électrode positive et ledit électrolyte étant l'un et/ou l'autre gélifié(s), ladite batterie étant exempte d'ions polysulfures, pour améliorer la durée de vie de ladite batterie.

Selon cette utilisation, le nitrate de lithium peut être présent dans l'électrolyte non aqueux gélifié et/ou dans l'électrode positive composite avant le premier cycle de charge/décharge de ladite batterie.

L'invention a donc pour deuxième objet un électrolyte non aqueux gélifié pour batterie au lithium gélifiée, ledit électrolyte étant caractérisé en ce qu'il contient du nitrate de lithium en tant que seul sel de lithium assurant la conductivité ionique, au moins un solvant et au moins un polymère gélifiant.

Selon une forme de réalisation préférée de l'invention, la quantité de nitrate de lithium dans l'électrolyte gélifié varie de 2 à 70 % en masse, et encore plus préférentiellement de 2 à 25 % en masse par rapport à la masse totale de l'électrolyte.

Le ou les solvants de l'électrolyte non aqueux gélifié peuvent être choisis parmi les éthers linéaires ou cycliques, les carbonates, les solvants soufrés (sulfolanes, sulfones, DMSO...), les esters linéaires ou cycliques (lactones), les nitriles, etc...

Parmi de tels solvants, on peut en particulier mentionner le diméthyléther, les diméthyléther de polyéthylène glycols (ou PEGDME) tels que le diméthyléther de tetraéthylèneglycol (TEGDME), le dioxolane, l'éthylènecarbonate (EC), le propylènecarbonate (PC), le diméthylcarbonate (DMC), le diéthylcarbonate (DEC), le méthyl-isopropyl carbonate (MiPC), l'acétate d'éthyle, l'éthylbutyrate (EB), et leurs mélanges.

De préférence, le ou les solvants représentent de 20 à 89,5% en masse, en encore plus préférentiellement de 35 à 75% en masse, par rapport à la masse totale de l'électrolyte non aqueux gélifié.

Le ou les polymères gélifiants de l'électrolyte non aqueux gélifié peuvent être choisis parmi les polyoléfines telles que les homopolymères ou les copolymères d'éthylène et de propylène, ou un mélange d'au moins deux de ces polymères ; les homopolymères et les copolymères d'oxyde d'éthylène (e.g. POE, copolymère du POE), d'oxyde de méthylène, d'oxyde de propylène, d'épichlorhydrine ou d'allylglycidyléther, et leurs mélanges ; les polymères halogénés tels que les homopolymères et les copolymères de chlorure de vinyle, de fluorure de vinylidène (PVdF), de chlorure de vinylidène, de tetrafluorure d'éthylène, ou de chlorotrifluoroéthylène, les copolymères de fluorure de vinylidène et d'hexafluoropropylène (PVdF-co-HFP) et leurs mélanges ; les homopolymères et les copolymères de styrène et leurs mélanges ; les polymères vinyliques ; les polymères non conducteurs électroniques de type anionique tels que le poly(styrène sulfonate), le poly(acide acrylique), le poly(glutamate), l'alginate, la pectine, la carraghénane et leurs mélanges ; les polyacrylates ; et l'un de leurs mélanges.

Selon l'invention, le ou les polymères gélifiants représentent de préférence de 5 à 60 % en masse, et encore plus préférentiellement de 15 à 50 % en masse, par rapport à la masse totale de l'électrolyte non aqueux gélifié.

Comme indiqué précédemment, le nitrate de lithium peut également être un ingrédient de l'électrode positive composite de la batterie avant son premier cycle de charge/décharge.

L'invention a donc pour troisième objet une électrode positive gélifiée pour batterie gélifiée au lithium, ladite électrode étant caractérisée en ce qu'elle est composée d'au moins une matière active d'électrode positive capable d'insérer des ions lithium de manière réversible, de nitrate de lithium en tant que seul sel de lithium assurant la conductivité ionique, d'au moins un liant polymère, et en ce qu'elle comprend un électrolyte non aqueux gélifié tel que défini selon le deuxième objet de l'invention.

Ainsi, ladite électrode positive gélifiée conforme à la présente invention est caractérisée en ce qu'elle comprend au moins une matière active d'électrode positive capable d'insérer des ions lithium de manière réversible, du nitrate de lithium en tant que seul sel de lithium assurant la conductivité ionique, au moins un solvant, au moins un polymère gélifiant, et au moins un liant polymère.

Selon une forme de réalisation préférée de l'invention, la quantité de nitrate de lithium dans l'électrode positive gélifiée varie de 0,5 à 10 % en masse, et encore plus préférentiellement de 2 à 6 % en masse par rapport à la masse totale d'électrode positive composite.

L'électrode positive gélifiée conforme à la présente invention comprend de préférence de 10 à 45 % en masse, et encore plus préférentiellement de 10 à 25 % en masse, d'un dit électrolyte non aqueux gélifié comprenant du nitrate de lithium à une concentration variant de 0,5 mol/L à 10 mol/L.

Le ou les solvants ainsi que le ou les polymères gélifiants utilisables dans l'électrode positive gélifiée conforme au troisième objet de l'invention sont tels que définis selon le deuxième objet de l'invention.

La matière active d'électrode positive gélifiée peut notamment être choisie parmi les phosphates de fer et de lithium, les oxydes de vanadium VOₓ (2 ≤ x ≤ 2,5), LiV₃O₈, Li_{y}Ni₁₋ₓC_{Ox}O₂, (0 ≤ x ≤ 1 ; 0 ≤ y ≤ 1), les spinelles de manganèse Li_{y}Mn₁₋ₓMₓO₂ (M = Cr, Al, V, Ni, 0 ≤ x ≤ 0,5 ; 0 ≤ y ≤ 2), utilisés seuls ou en mélanges.

Selon une forme de réalisation préférée de l'invention, la matière active de l'électrode positive gélifiée est choisie parmi les phosphates de fer lithiés, tels qu'en particulier le LiFePO₄.

La matière active d'électrode positive représente de préférence de 55 à 90 % en masse, et encore plus préférentiellement de 70 à 90 % en masse environ, par rapport à la masse totale de l'électrode positive gélifiée.

Le liant polymère peut être choisi parmi le PVdF, un copolymère du PVdF, le poly(oxyde d'éthylène) (POE), un copolymère du POE, un polymère conducteur de type cationique, une polyoléfine telle que le polyéthylène, un copolymère de polyoléfine telle qu'un copolymère de polyéthylène et l'un de leurs mélanges.

Le liant polymère représente de préférence de 2 à 20 % en masse environ, et encore plus préférentiellement de 3 à 15 % en masse, par rapport à la masse totale d'électrode positive gélifiée.

L'électrode positive gélifiée peut en outre renfermer au moins un additif de conduction électronique. Dans ce cas, un tel additif peut notamment être choisi parmi les charges carbonées telles que le noir de carbone, le graphite, les fibres et nanofibres de carbone, les nanotubes de carbone et le graphène ; les particules d'au moins un métal conducteur tel que l'aluminium, le platine, le fer, le cobalt et le nickel ; et l'un de leurs mélanges.

L'additif de conduction électronique représente de préférence de 0 à 10 % en masse, et encore plus préférentiellement de 0 à 3 % en masse, par rapport à la masse totale d'électrode positive gélifiée.

Selon une forme de réalisation préférée de l'invention, l'électrode positive gélifiée est déposée sur un collecteur de courant. Le collecteur de courant de l'électrode positive gélifiée est alors de préférence en aluminium, éventuellement revêtu d'une couche carbonée.

Enfin, l'invention a pour quatrième objet une batterie gélifiée au lithium comprenant une électrode positive, une électrode négative à base de lithium métallique ou d'un alliage de lithium, un électrolyte non aqueux gélifié disposé entre ladite électrode positive et ladite électrode négative, ladite batterie étant caractérisée en ce que :
- elle est exempte d'ions polysulfures,
- elle comprend du nitrate de lithium en tant que seul sel de lithium assurant la conductivité ionique, et
- ledit électrolyte non aqueux gélifié est un électrolyte non aqueux gélifié tel que défini selon le deuxième objet de l'invention et/ou ladite électrode positive est une électrode positive gélifiée telle que définie selon le troisième objet de l'invention.

Ainsi, selon l'invention, le nitrate de lithium assurant la conductivité ionique de la batterie pendant son fonctionnement est introduit avant la première charge de la batterie, et il est soit dans l'électrolyte non aqueux gélifié, soit dans l'électrode positive, soit à la fois dans l'électrolyte non aqueux gélifié et dans l'électrode positive.

Selon une forme de réalisation préférée de l'invention, la quantité totale de nitrate de lithium dans l'ensemble des éléments constituant un complexe {électrode positive + électrolyte non aqueux gélifié} de la batterie varie de 0,5 à 30 % en masse, et encore plus préférentiellement de 0,5 à 15 % en masse, par rapport à la masse totale du complexe.

Dans la batterie au lithium selon la présente invention, l'épaisseur des différents éléments de la batterie est en général de l'ordre de 1 à une centaine de micromètres.

La présente invention est illustrée par les exemples suivants, auxquels elle n'est cependant pas limitée.

### EXEMPLES

L'avantage d'utiliser du nitrate de lithium dans la composition de l'électrolyte et/ou de l'électrode positive peut être mesuré par caractérisation de l'électro-dépôt du lithium dans une cellule symétrique lithium/électrolyte/lithium et par suivi du cyclage de cellules complètes.

### Exemple 1 : Mise en évidence de l'effet du nitrate de lithium sur la qualité de l'électro-dépôt de lithium

On a préparé une cellule complète ayant la constitution suivante :
**Electrolyte gélifié** (solution électrolytique non aqueuse gélifiée selon le deuxième objet de l'invention) :
- 25 g, soit 50 % en masse, d'une solution à 4,6 M de nitrate de lithium (Alfa Aesar) dans du diméthyléther de polyéthylène glycol (PEGDME 240 g/mol vendu par la société TCI Chemicals) ;
- 22,5 g, soit 45 % en masse, de PVdF Solef 21510 (Solvay) ;
- 2,5 g, soit 5 % en masse de copolymère de polyéthylène oxyde (ICPDAP vendu par la société Nippon Shokubai).

Les différents constituants de l'électrolyte gélifié ont été mélangés dans un mélangeur vendu sous la dénomination commerciale Plastograph^{®} par la société Brabender^{®} à une température de 110°C. Le mélange ainsi obtenu a ensuite été laminé à 110°C sous la forme d'un film d'électrolyte gélifié ayant une épaisseur d'environ 20 µm.

**Electrode positive gélifiée** (Electrode positive gélifiée comprenant du nitrate de lithium selon le troisième objet de l'invention) :
- 29 g, soit 58 % en masse, de LiFePO₄ vendu sous la dénomination commerciale LFP P600A par la société Pulead ;
- 14 g, soit 28 % en masse, d'une solution à 4,6 M de nitrate de lithium (Alfa Aesar) dans du diméthyléther de polyéthylène glycol (PEGDME 240 g/mol vendu par la société TCI Chemicals) ;
- 6 g, soit 12 % en masse, de PVdF Solef 21510 (Solvay) ;
- 1 g, soit 2 % en masse, de noir de carbone vendu sous la dénomination commerciale Ketjenblack^{®} EC600JD par la société Akzo Nobel

Les différents constituants de l'électrode positive gélifiée ont été mélangés dans un mélangeur vendu sous la dénomination commerciale Plastograph^{®} par la société Brabender^{®} à une température de 140°C. Le mélange ainsi obtenu a ensuite été laminé à 95°C sous la forme d'un film d'électrode positive gélifiée ayant une épaisseur d'environ 30 µm.

### Assemblage des cellules :

Un feuillard de lithium métallique d'une épaisseur de 100 µm a été utilisé comme électrode négative.

Un collecteur d'aluminium comportant un revêtement carboné (Armor) a été utilisé comme collecteur de courant pour l'électrode positive. Les différentes couches Lithium/électrolyte gélifié/électrode positive/collecteur ont été laminées sous 5 bars de pression à une température de 80°C pour fabriquer les cellules. Le laminage a été réalisé sous atmosphère contrôlée (point de rosée -40°C).

Les cellules ainsi préparées ont ensuite été emprisonnées dans un emballage étanche thermoscellable pour les protéger de l'humidité.

Les cellules ont été testées en cyclage galvanostatique (courant constant) à 40°C. Le premier cycle a été effectué à C/10 (charge en 10 heures) et D/10 (décharge en 10 heures) et les suivants à C/4 (charge en 4 heures) et D/2 (décharge en 2 heures).

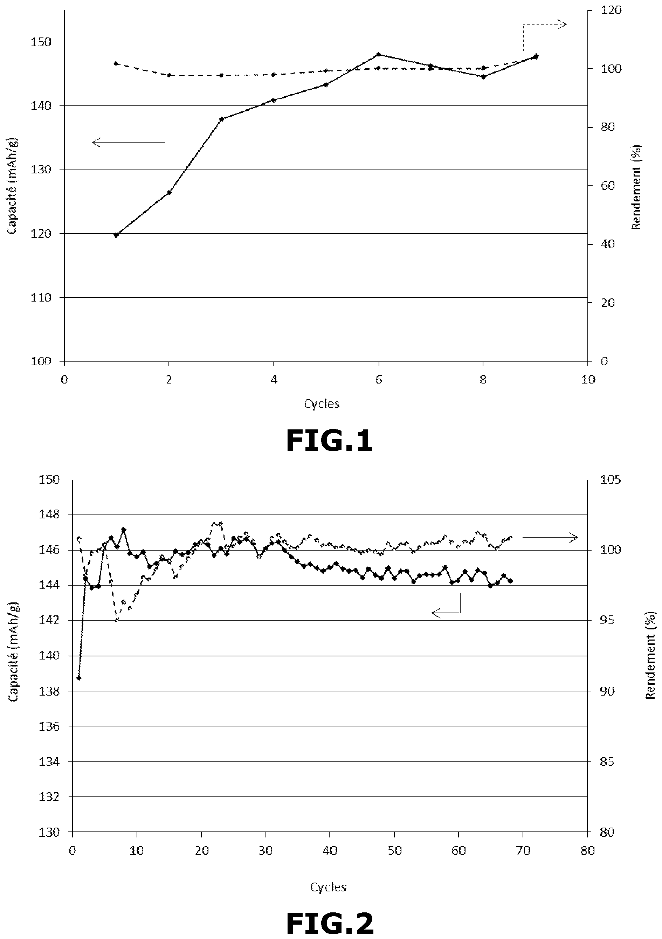

L'évolution de la capacité de décharge des cellules en (en mAh/g) et du rendement coulombique (en %) en fonction du nombre de cycle est reportée sur la figure 1 annexée. Sur cette figure, la courbe en trait plein correspond à la capacité de décharge et la courbe en trait discontinu correspond au rendement coulombique.

Ces résultats montrent la bonne capacité restituée à 40°C. On note notamment un accroissement de celle-ci au cours des cycles. Le rendement de la cellule est également stable. Ces résultats attestent de la bonne qualité du dépôt de lithium à l'électrode négative et démontrent que la présence du nitrate de lithium permet d'améliorer les performances d'une batterie gélifiée au lithium, en particulier sa durée de vie.

### Exemple 2 : Autre exemple de mise en évidence de l'effet du nitrate de lithium sur la qualité de l'électro-dépôt de lithium

On a préparé une cellule complète ayant la constitution suivante :
**Electrolyte gélifié** (solution électrolytique non aqueuse gélifiée selon le deuxième objet de l'invention) :
- 25 g, soit 50 % en masse, d'une solution à 1 M de nitrate de lithium (Alfa Aesar) dans du diméthyléther de polyéthylène glycol (PEGDME 240 g/mol vendu par la société TCI Chemicals) ;
- 22,5 g, soit 45 % en masse, de PVdF Solef 21510 (Solvay) ;
- 2,5 g, soit 5 % en masse, de copolymère de polyéthylène oxyde (ICPDAP vendu par la société Nippon Shokubai).

Les différents constituants de l'électrolyte gélifié ont été mélangés dans un mélangeur vendu sous la dénomination commerciale Plastograph^{®} par la société Brabender^{®} à une température de 110°C. Le mélange ainsi obtenu a ensuite été laminé à 110°C sous la forme d'un film d'électrolyte gélifié ayant une épaisseur d'environ20 µm.

**Electrode positive gélifiée** (Electrode positive gélifiée comprenant du nitrate de lithium selon le troisième objet de l'invention) :
- 29 g, soit 58 % en masse, de LiFePO₄ vendu sous la dénomination commerciale LFP P600A par la société Pulead ;
- 14 g, soit 28 % en masse, d'une solution à 1 M de nitrate de lithium (Alfa Aesar) dans du diméthyléther de polyéthylène glycol (PEGDME 240 g/mol vendu par la société TCI Chemicals) ;
- 6 g, soit 12 % en masse, de PVdF Solef 21510 (Solvay) ;
- 1 g soit 2 % en masse de noir de carbone vendu sous la dénomination commerciale Ketjenblack^{®} EC600JD par la société Akzo Nobel.

Les différents constituants de l'électrode positive gélifiée ont été mélangés dans un mélangeur vendu sous la dénomination commerciale Plastograph^{®} par la société Brabender^{®} à une température de 140°C. Le mélange ainsi obtenu a ensuite été laminé à 95°C sous la forme d'un film d'électrode positive gélifiée ayant une épaisseur d'environ 30 µm.

### Assemblage des cellules :

Un feuillard de lithium métallique d'une épaisseur de 100 µm a été utilisé comme électrode négative.

Un collecteur d'aluminium comportant un revêtement carboné (Armor) a été utilisé comme collecteur de courant pour l'électrode positive. Les différentes couches Lithium/électrolyte gélifié/électrode positive/collecteur ont été laminées sous 5 bars de pression à une température de 80°C pour fabriquer les cellules. Le laminage a été réalisé sous atmosphère contrôlée (point de rosée -40°C).

Les cellules ainsi préparées ont ensuite été emprisonnées dans un emballage étanche thermoscellable pour les protéger de l'humidité.

Les cellules ont été testées en cyclage galvanostatique (courant constant) à 40°C. Le premier cycle a été effectué à C/10 (charge en 10 heures) et D/10 (décharge en 10 heures) et les suivants à C/4 (charge en 4 heures) et D/2 (décharge en 2 heures).

L'évolution de la capacité de décharge des cellules en (en mAh/g) et du rendement coulombique (en %) en fonction du nombre de cycle est reportée sur la figure 2 annexée. Sur cette figure, la courbe en trait plein correspond à la capacité de décharge et la courbe en trait discontinu correspond au rendement coulombique.

Ces résultats montrent que la capacité de décharge de la cellule reste stable sur plusieurs dizaines de cycles. Par ailleurs, la capacité restituée est proche de la capacité théorique attendue (170 mAh/g), attestant du bon fonctionnement de la cellule. Le rendement coulombique est stable à partir du 20^{ème} cycle, proche de 100 %, ce qui atteste de la réversibilité des processus électrochimiques à l'oeuvre dans le système.

## Revendications

1. Utilisation du nitrate de lithium, en tant que seul sel de lithium assurant la conductivité ionique dans une batterie au lithium comprenant au moins une électrode positive, au moins un électrolyte non aqueux et au moins une électrode négative à base de lithium métallique ou d'un alliage de lithium, ladite électrode positive et ledit électrolyte étant l'un et/ou l'autre gélifié(s), ladite batterie étant exempte d'ions polysulfures, pour améliorer la durée de vie de ladite batterie.

2. Utilisation selon la revendication 1, **caractérisée en ce que** le nitrate de lithium est présent dans l'électrolyte non aqueux gélifié et/ou dans l'électrode positive avant le premier cycle de charge/décharge de ladite batterie.

3. Électrolyte non aqueux gélifié pour batterie au lithium gélifiée, ledit électrolyte étant **caractérisé en ce qu'**il contient du nitrate de lithium, en tant que seul sel de lithium assurant la conductivité ionique, au moins un solvant et au moins un polymère gélifiant.

4. Électrolyte selon la revendication 3, **caractérisé en ce que** la quantité de nitrate de lithium varie de 2 à 70 % en masse par rapport à la masse totale de l'électrolyte.

5. Électrolyte selon la revendication 3 ou 4, **caractérisé en ce que** le ou les solvants sont choisis parmi les éthers linéaires ou cycliques, les carbonates, les solvants soufrés, les esters linéaires ou cycliques et les nitriles.

6. Électrolyte selon l'une quelconque des revendications 3 à 5, **caractérisé en ce que** le ou les polymères gélifiants sont choisis parmi les polyoléfines ; les homopolymères et les copolymères d'oxyde d'éthylène et leurs mélanges ; les polymères halogénés ; les homopolymères et les copolymères de styrène et leurs mélanges ; les polymères vinyliques ; les polymères non conducteurs électroniques de type anionique ; les polyacrylates ; et l'un de leurs mélanges.

7. Électrolyte selon l'une quelconque des revendications 3 à 6, **caractérisé en ce que** le ou les polymères gélifiants représentent de 5 à 60 % en masse par rapport à la masse totale dudit électrolyte.

8. Électrode positive gélifiée pour batterie gélifiée au lithium, ladite électrode étant **caractérisée en ce qu'**elle comporte au moins une matière active d'électrode positive capable d'insérer des ions lithium de manière réversible, du nitrate de lithium en tant que seul sel de lithium assurant la conductivité ionique, et au moins un liant polymère, et **en ce qu'**elle comprend un électrolyte non aqueux gélifié tel que défini selon l'une quelconque des revendications 3 à 7.

9. Électrode selon la revendication 8, **caractérisée en ce que** la quantité de nitrate de lithium varie de 0,5 à 10 % en masse par rapport à la masse totale de l'électrode positive gélifiée.

10. Électrode selon la revendication 8 ou 9, **caractérisée en ce qu'**elle comprend de 10 à 45 % en masse d'un dit électrolyte non aqueux gélifié comprenant du nitrate de lithium à une concentration de 0,5 mol/L à 10 mol/L.

11. Électrode selon l'une quelconque des revendications 8 à 10, **caractérisée en ce que** la matière active d'électrode positive représente de 55 à 90 % en masse par rapport à la masse totale d'électrode positive gélifiée.

12. Électrode selon l'une quelconque des revendications 8 à 11, **caractérisée en ce qu'**elle est déposée sur un collecteur de courant.

13. Électrode selon l'une quelconque des revendications 8 à 12, **caractérisée en ce que** la matière active d'électrode positive est choisie parmi les phosphates de fer lithiés.

14. Batterie gélifiée au lithium comprenant une électrode positive, une électrode négative à base de lithium métallique ou d'un alliage de lithium, un électrolyte non aqueux gélifié disposé entre ladite électrode positive et ladite électrode négative, ladite batterie étant **caractérisée en ce que** :
- elle est exempte d'ions polysulfures,
- elle comprend du nitrate de lithium en tant que seul sel de lithium assurant la conductivité ionique, et
- ledit électrolyte non aqueux gélifié est un électrolyte non aqueux gélifié tel que défini selon l'une quelconque des revendications 3 à 7 et/ou ladite électrode positive est une électrode positive gélifiée telle que définie selon l'une quelconque des revendications 8 à 13.

15. Batterie selon la revendication 14, **caractérisée en ce que** la quantité totale de nitrate de lithium dans l'ensemble des éléments constituant un complexe {électrode positive + électrolyte non aqueux gélifié} de la batterie varie de 0,5 à 30 % en masse par rapport à la masse totale dudit complexe de ladite batterie.

## Patentansprüche

1. Verwendung von Lithiumnitrat als das einzige Lithiumsalz, das die lonenleitfähigkeit in einer Lithiumbatterie, umfassend mindestens eine positive Elektrode, mindestens einen nicht wässrigen Elektrolyt und mindestens eine negative Elektrode auf Basis metallischen Lithiums oder einer Lithiumlegierung, sicherstellt, wobei von der positiven Elektrode und dem Elektrolyt das/die eine und/oder das/die andere geliert ist, wobei die Batterie frei von Polysulfidionen ist, um die Lebensdauer der Batterie zu verbessern.

2. Verwendung nach Anspruch 1, **dadurch gekennzeichnet, dass** das Lithiumnitrat in dem gelierten nicht wässrigen Elektrolyt und/oder in der positiven Elektrode vor dem ersten Lade/Entlade-Zyklus der Batterie vorhanden ist.

3. Gelierter nicht wässriger Elektrolyt für eine gelierte Lithiumbatterie, wobei der Elektrolyt **dadurch gekennzeichnet ist, dass** er Lithiumnitrat als das einzige Lithiumsalz, das die lonenleitfähigkeit sicherstellt, mindestens ein Lösungsmittel und mindestens ein gelierendes Polymer enthält.

4. Elektrolyt nach Anspruch 3, **dadurch gekennzeichnet, dass** die Menge von Lithiumnitrat von 2 bis 70 Masse-% bezogen auf die Gesamtmasse des Elektrolyten variiert.

5. Elektrolyt nach Anspruch 3 oder 4, **dadurch gekennzeichnet, dass** das oder die Lösungsmittel aus geradkettigen oder zyklischen Ethern, Karbonaten, schwefelhaltigen Lösungsmitteln, geradkettigen oder zyklischen Estern und Nitrilen ausgewählt sind.

6. Elektrolyt nach einem der Ansprüche 3 bis 5, **dadurch gekennzeichnet, dass** das oder die gelierende(n) Polymer(e) aus Polyolefinen; Ethylenoxid-Homopolymeren und -Copolymeren und ihren Mischungen; halogenhaltigen Polymeren; Styrol-Homopolymeren und -Copolymeren und ihren Mischungen; Vinylpolymeren; anionischen nicht elektronisch leitenden Polymeren; Polyakrylaten; und einer ihrer Mischungen ausgewählt sind.

7. Elektrolyt nach einem der Ansprüche 3 bis 6, **dadurch gekennzeichnet, dass** das oder die gelierende(n) Polymere von 5 bis 60 Masse-% bezogen auf die Gesamtmasse des Elektrolyten darstellen.

8. Gelierte positive Elektrode für die gelierte Lithiumbatterie, wobei die Elektrode **dadurch gekennzeichnet ist, dass** sie mindestens eine aktive Masse der positiven Elektrode, die fähig ist, Lithiumionen reversibel einzubringen, Lithiumnitrat als das einzige Lithiumsalz, das die lonenleitfähigkeit sicherstellt, und mindestens ein Polymerbindemittel aufweist, und **dadurch, dass** sie einen gelierten nicht wässrigen Elektrolyten nach einem der Ansprüche 3 bis 7 umfasst.

9. Elektrode nach Anspruch 8, **dadurch gekennzeichnet, dass** die Menge von Lithiumnitrat von 0,5 bis 10 Masse-% bezogen auf die Gesamtmasse der gelierten positiven Elektrode variiert.

10. Elektrode nach Anspruch 8 oder 9, **dadurch gekennzeichnet, dass** sie von 10 bis 45 Masse-% der gelierten nicht wässrigen Elektrode, umfassend Lithiumnitrat in einer Konzentration von 0,5 mol/l bis 10 mol/l, umfasst.

11. Elektrode nach einem der Ansprüche 8 bis 10, **dadurch gekennzeichnet, dass** die aktive Masse der positiven Elektrode von 55 bis 90 Masse-% bezogen auf die Gesamtmasse der gelierten positiven Elektrode darstellt.

12. Elektrode nach einem der Ansprüche 8 bis 11, **dadurch gekennzeichnet, dass** sie auf einen Stromkollektor aufgebracht ist.

13. Elektrode nach einem der Ansprüche 8 bis 12, **dadurch gekennzeichnet, dass** die aktive Masse der positiven Elektrode aus lithiierten Eisenphosphaten ausgewählt ist.

14. Gelierte Lithiumbatterie, umfassend eine positive Elektrode, eine negative Elektrode auf Basis eines metallischen Lithiums oder einer Lithiumlegierung, einen gelierten nicht wässrigen Elektrolyten, der zwischen der positiven Elektrode und der negativen Elektrode angeordnet ist, wobei die Batterie **dadurch gekennzeichnet ist, dass:**
- sie frei von Polysulfidionen ist,
- sie Lithiumnitrat als das einzige Lithiumsalz, das die lonenleitfähigkeit sicherstellt, umfasst und
- der gelierte nicht wässrige Elektrolyt ein gelierter nicht wässriger Elektrolyt wie nach einem der Ansprüche 3 bis 7 ist und/oder die positive Elektrode eine gelierte positive Elektrode wie nach einem der Ansprüche 8 bis 13 ist.

15. Batterie nach Anspruch 14, **dadurch gekennzeichnet, dass** die Gesamtmenge von Lithiumnitrat in der Kombination von Elementen, die einen Komplex {positive Elektrode + gelierter nicht wässriger Elektrolyt} der Batterie ausmachen, von 0,5 bis 30 Masse-% bezogen auf die Gesamtmasse des Komplexes der Batterie variiert.

## Claims

1. Use of lithium nitrate, as sole lithium salt providing the ion conductivity in a lithium battery comprising at least one positive electrode, at least one non-aqueous electrolyte and at least one negative electrode based on lithium metal or on a lithium alloy, said positive electrode and said electrolyte being one or both gelled, said battery being devoid of polysulfide ions, for improving the lifetime of said battery.

2. Use according to Claim 1, **characterized in that** the lithium nitrate is present in the gelled non-aqueous electrolyte and/or in the positive electrode before the first charge/discharge cycle of said battery.

3. Gelled non-aqueous electrolyte for a gelled lithium battery, said electrolyte being **characterized in that** it contains lithium nitrate as sole lithium salt providing the ion conductivity, at least one solvent and at least one gelling polymer.

4. Electrolyte according to Claim 3, **characterized in that** the amount of lithium nitrate varies from 2% to 70% by weight, with respect to the total weight of the electrolyte.

5. Electrolyte according to Claim 3 or 4, **characterized in that** the solvent(s) are chosen from linear or cyclic ethers, carbonates, sulfur-comprising solvents, linear or cyclic esters and nitriles.

6. Electrolyte according to any one of Claims 3 to 5, **characterized in that** the gelling polymer(s) are chosen from polyolefins; homopolymers and copolymers of ethylene oxide and their mixtures; halogenated polymers; homopolymers and copolymers of styrene and their mixtures; vinyl polymers; non-electron-conducting polymers of anionic type; polyacrylates; and one of their mixtures.

7. Electrolyte according to any one of Claims 3 to 6, **characterized in that** the gelling polymer(s) represent from 5% to 60% by weight, with respect to the total weight of said electrolyte.

8. Gelled positive electrode for a gelled lithium battery, said electrode being **characterized in that** it comprises at least one positive electrode active material capable of reversibly inserting lithium ions, lithium nitrate as sole lithium salt providing the ion conductivity and at least one polymer binder, and **in that** it comprises a gelled non-aqueous electrolyte as defined according to any one of Claims 3 to 7.

9. Electrode according to Claim 8, **characterized in that** the amount of lithium nitrate varies from 0.5% to 10% by weight, with respect to the total weight of the gelled positive electrode.

10. Electrode according to Claim 8 or 9, **characterized in that** it comprises from 10% to 45% by weight of a said gelled non-aqueous electrolyte comprising lithium nitrate at a concentration of 0.5 mol/l to 10 mol/l.

11. Electrode according to any one of Claims 8 to 10, **characterized in that** the positive electrode active material represents from 55% to 90% by weight, with respect to the total weight of gelled positive electrode.

12. Electrode according to any one of Claims 8 to 11, **characterized in that** it is deposited on a current collector.

13. Electrode according to any one of Claims 8 to 12, **characterized in that** the positive electrode active material is chosen from lithiated iron phosphates.

14. Gelled lithium battery comprising a positive electrode, a negative electrode based on lithium metal or on a lithium alloy, a gelled non-aqueous electrolyte positioned between said positive electrode and said negative electrode, said battery being **characterized in that**:
- it is devoid of polysulfide ions,
- it comprises lithium nitrate as sole lithium salt providing the ion conductivity, and
- said gelled non-aqueous electrolyte is a gelled non-aqueous electrolyte as defined according to any one of Claims 3 to 7 and/or said positive electrode is a gelled positive electrode as defined according to any one of Claims 8 to 13.

15. Battery according to Claim 14, **characterized in that** the total amount of lithium nitrate in the combined elements constituting a {positive electrode + gelled non-aqueous electrolyte} complex of the battery varies from 0.5% to 30% by weight, with respect to the total weight of said complex of said battery.
